(19) Europäisches Patentamt
European Patent Office
Office européen des brevets

(11) EP 3 279 904 A1

(12) # EUROPEAN PATENT APPLICATION
published in accordance with Art. 153(4) EPC

(43) Date of publication:
**07.02.2018 Bulletin 2018/06**

(21) Application number: **16773153.8**

(22) Date of filing: **31.03.2016**

(51) Int Cl.:
***H01B 13/14** (2006.01)* ***C08L 27/18** (2006.01)*

(86) International application number:
**PCT/JP2016/060755**

(87) International publication number:
**WO 2016/159273 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2015 JP 2015073364**

(71) Applicant: **Daikin Industries, Ltd.**
**Osaka-shi, Osaka 530-8323 (JP)**

(72) Inventors:
- **YOSHIMOTO, Hiroyuki**
  **Osaka-shi, Osaka 530-8323 (JP)**
- **YAMANAKA, Taku**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **METHOD FOR PRODUCING ELECTRIC WIRE**

(57) The invention provides a method for producing an electric wire with a low dielectric loss. The method for producing an electric wire includes a coating step of coating a core wire with a mixture of a high-molecular-weight polytetrafluoroethylene (A) and a non-fibrillatable low-molecular-weight polytetrafluoroethylene (B); a first heating step of heating the coated core wire up to the first melting point of the low-molecular-weight polytetrafluoroethylene (B) or higher; a second heating step of heating the coated core wire to 150°C to 300°C; and a cooling step of cooling the coated core wire.

EP 3 279 904 A1

## Description

### TECHNICAL FIELD

The invention relates to methods for producing electric wires.

### BACKGROUND ART

Cables for transmitting high-frequency signals, such as coaxial cables and LAN cables, always suffer dielectric loss.

The dielectric loss is a function of permittivity ($\varepsilon$) and dielectric loss tangent (tan $\delta$), and these parameters are preferably as low as possible. For the purpose of reducing the dielectric loss, high-frequency cables are proposed which include, as an insulating coating material, polytetrafluoroethylene (PTFE) excellent in these electric properties.

For example, Patent Literature 1 aims to provide a high-frequency cable containing PTFE as an insulating coating layer, having end portions which can smoothly be processed, and having a low dielectric loss, and thus discloses a PTFE powder mixture for insulation of a product for transmitting high-frequency signals, which is obtained by mixing a low-molecular-weight PTFE powder and a high-molecular-weight PTFE powder each obtained by emulsion polymerization of tetrafluoroethylene (TFE).

Patent Literature 2 aims to provide a PTFE molded article having excellent end processability, adhesion with a core wire, surface smoothness, electric properties, and mechanical strength, and thus discloses a PTFE molded article having at least one endothermic peak in a temperature range of 340°C ±15°C on a crystal melting curve obtained by a differential scanning calorimeter, an enthalpy of fusion of 62 mJ/mg or higher at 290°C to 350°C calculated from the crystal melting curve, a thermal instability index of 20 or higher, and a decomposition temperature of 420°C or lower, wherein the polytetrafluoroethylene contains 0 to 0.06 mass% of a modifying monomer unit other than tetrafluoroethylene in all the monomer units.

Patent Literature 3 aims to provide a PTFE molded article including a thin resin layer and having excellent end processability, electric properties, and mechanical strength, and thus discloses a PTFE molded article having at least one endothermic peak in a temperature range of 340°C ±15°C on a crystal melting curve obtained by a differential scanning calorimeter, an enthalpy of fusion of 62 mJ/mg or higher at 290°C to 350°C calculated from the crystal melting curve, and a hardness (JIS K6301-1975, Type A) of 70 or higher, wherein the PTFE molded article contains more than 0.06 mass% and not more than 1 mass% of a modifying monomer unit derived from at least one modifying monomer selected from the group consisting of hexafluoroethylene, perfluoromethyl vinyl ether, perfluoropropyl vinyl ether, fluorodioxole, perfluoromethyl ethylene, and perfluorobutyl ethylene in all the monomer units, and is non-melt-fabricable.

### CITATION LIST

- Patent Literature

Patent Literature 1: JP 4617538 B
Patent Literature 2: JP 5167910 B
Patent Literature 3: JP 5256889 B

### SUMMARY OF INVENTION

- Technical Problem

There is a growing demand for better characteristics of electric wires, and electric wires having a lower dielectric loss are required. The invention aims to provide a method for producing an electric wire having a low dielectric loss.

- Solution to Problem

The inventors performed studies on a method for producing an electric wire having a low dielectric loss and focused on the material of a coat for an electric wire and the processing steps after coating the core with the material of a coat. The inventors then found out that an electric wire having a significantly low dielectric loss can be produced by preparing a mixture of a high-molecular-weight polytetrafluoroethylene and a non-fibrillatable low-molecular-weight polytetrafluoroethylene as the material of a coat, coating a core with the mixture, and then gradually cooling the coated

core in a heating step after the coating, in other words, by heating the coated core up to the first melting point of the low-molecular-weight PTFE or higher and then heating it to 150°C to 300°C so as not to be cooled rapidly.

Accordingly, the invention relates to a method for producing an electric wire including:

a coating step of coating a core wire with a mixture of a high-molecular-weight polytetrafluoroethylene (PTFE) (A) and a non-fibrillatable low-molecular-weight PTFE (B);
a first heating step of heating the coated core wire up to the first melting point of the low-molecular-weight PTFE (B) or higher;
a second heating step of heating the coated core wire to 150°C to 300°C; and
a cooling step of cooling the coated core wire.

In the method for producing an electric wire, the second heating step preferably satisfies a temperature drop rate of 500°C/min or lower.

In the method for producing an electric wire, the second heating step preferably satisfies a heating time of 6 to 60 seconds.

- Advantageous Effects of Invention

The method for producing an electric wire of the invention can provide an electric wire having a low dielectric loss.

DESCRIPTION OF EMBODIMENTS

The invention will be described in detail below.

In the coating step, the core wire is coated with the mixture of a high-molecular-weight PTFE (A) and a non-fibrillatable low-molecular-weight PTFE (B). The coating step can be performed by a conventionally known method. For example, the mixture (a preformed article to be described later) is put into a paste extruder and extruded onto the core wire.

The mixture may consist only of the high-molecular-weight PTFE (A) and the low-molecular-weight PTFE (B). Still, it is preferably a mixture of the high-molecular-weight PTFE (A), the low-molecular-weight PTFE (B), and an extrusion aid.

The method for producing an electric wire of the invention preferably further includes a mixing step of mixing the high-molecular-weight PTFE (A), the low-molecular-weight PTFE (B), and optionally the extrusion aid to provide a mixture before the coating step.

The specifications of the high-molecular-weight PTFE (A), the low-molecular-weight PTFE (B), and the extrusion aid will be described later.

In order to provide an electric wire with a lower dielectric loss, the mixture preferably satisfies that the mass ratio of the high-molecular-weight PTFE (A) to the low-molecular-weight PTFE (B) (PTFE (A)/PTFE (B)) is 80/20 to 99/1, more preferably 85/15 to 97/3, still more preferably 90/10 to 95/5.

The ratio of the sum of the masses of the high-molecular-weight PTFE (A) and the low-molecular-weight PTFE (B) to the mass of the extrusion aid ((sum of high-molecular-weight PTFE (A) and low-molecular-weight PTFE (B))/extrusion aid) in the mixture is preferably 87/13 to 75/25.

Too small an amount of the extrusion aid may cause a difficulty in stable molding, while too large an amount of the extrusion aid may fail to provide an electric wire having sufficient mechanical strength. This ratio is more preferably 83/17 to 76/24, still more preferably 82/18 to 78/22.

Examples of the method for mixing the high-molecular-weight PTFE (A) and the low-molecular-weight PTFE (B) include dry-blending of a powder of the high-molecular-weight PTFE (A) and a powder of the low-molecular-weight PTFE (B) to provide a powder mixture (dry mixing); or mixing of an aqueous dispersion of the high-molecular-weight PTFE (A) and an aqueous dispersion of the low-molecular-weight PTFE (B) and subsequent coagulation of particles to provide a powder mixture (co-coagulation).

In order to simplify the production method and to reduce the production cost, the dry mixing is preferred. The dry mixing can be performed by a conventionally known method.

In the case of using fine PTFE particles (i.e., fine powder) obtainable by emulsion polymerization, the co-coagulation is preferred. The co-coagulation may be performed under conventional conditions. In a preferred method, two aqueous dispersions are mixed and then mechanical stirring force is allowed to act on the mixture. At this time, an inorganic acid, such as hydrochloric acid or nitric acid, or a metal salt thereof may be used together as a coagulating agent. Also, an organic liquid may be present and a filler may optionally be co-present. Still, the method is not limited to any of these methods. The co-coagulation is followed by dehydration and drying, thereby providing a powder mixture.

In order to promote the molding, the powder mixture preferably has an average secondary particle size of 200 to 1000 μm, more preferably 300 to 700 μm. The average secondary particle size of the powder mixture is the value

corresponding to 50% of the cumulative volume in the particle size distribution determined using a laser diffraction particle size distribution analyzer (e.g., a product from Jeol Ltd.) at a pressure of 0.1 MPa and a measurement time of 3 seconds without cascade impaction.

In the case of mixing the extrusion aid, the extrusion aid is usually added to a powder mixture of the high-molecular-weight PTFE (A) and the low-molecular-weight PTFE (B), and the components are optionally aged, so that the powder mixture and the extrusion aid are well mixed with each other. Thereby, a mixture containing the high-molecular-weight PTFE (A), the low-molecular-weight PTFE (B), and the extrusion aid can be produced.

In addition to the high-molecular-weight PTFE (A), the low-molecular-weight PTFE (B), and the extrusion aid, the mixture may contain a second optional component as appropriate.

Examples of the second optional component include resin other than PTFE. Examples of the resin other than PTFE include TFE/hexafluoropropylene (HFP) copolymers (FEPs), TFE/perfluoro(alkyl vinyl ether) (PAVE) copolymers (PFAs), ethylene/TFE copolymers (ETFEs), polyvinylidene fluoride (PVdF), polychlorotrifluoroethylene (PCTFE), polypropylene, and polyethylene.

In order to achieve good thermal stability, the PAVE is preferably at least one selected from the group consisting of perfluoro(methyl vinyl ether) (PMVE), perfluoro(ethyl vinyl ether) (PEVE), perfluoro(propyl vinyl ether) (PPVE), and perfluoro(butyl vinyl ether), more preferably PPVE. The resin other than PTFE may contain one type of the PAVE units, or may contain two or more types thereof.

In order to improve the heat resistance of the resulting electric wire and to enable stable use thereof at relatively high temperature, the resin other than PTFE is preferably a melt-fabricable fluororesin. Examples of the melt-fabricable fluororesin include FEPs, PFAs, PVdF, and ETFEs, and preferred are FEPs and PFAs. Examples of the PFAs include TFE/PMVE copolymers and TFE/PPVE copolymers.

For the mixture containing the resin other than PTFE, the sum of the masses of the high-molecular-weight PTFE (A) and the low-molecular-weight PTFE (B) is preferably not less than 40 mass% but less than 100 mass%, while the amount of the resin other than PTFE is not less than 0 mass% but less than 60 mass%, relative to 100 mass% in total of the high-molecular-weight PTFE (A), the low-molecular-weight PTFE (B), and the resin other than PTFE. Less than 40 mass% in total of the high-molecular-weight PTFE (A) and the low-molecular-weight PTFE (B) may cause poor heat resistance, chemical resistance, weather resistance, non-adhesiveness, electric insulation, incombustibility, and mechanical strength of the resulting electric wire.

In addition to the resin other than PTFE, the second optional component may also include any of surfactants, antioxidants, photostabilizers, fluorescent brighteners, colorants, pigments, dyes, and fillers, for example. Mention may be made of powder or fibrous powder of carbon black, graphite, alumina, mica, silicon carbide, boron nitride, titanium oxide, bismuth oxide, bronze, gold, silver, copper, and nickel.

The second optional component (excluding the resin other than PTFE) may be in an amount that does not impair the effects of the invention. The amount of the second optional component is preferably 20 mass% or less, more preferably less than 5 mass%, relative to the sum of the masses of the high-molecular-weight PTFE (A), the low-molecular-weight PTFE (B), and the second optional component (excluding the resin other than PTFE).

The mixture may be a preformed one (preformed article). In other words, the production method of the invention may include, after mixing the high-molecular-weight PTFE (A), the low-molecular-weight PTFE (B), and optionally the extrusion aid and the second optional component, a step of preforming the mixture.

The preforming can be achieved by a usual method. For example, the preforming may be achieved by filling a mixture of the high-molecular-weight PTFE (A), the low-molecular-weight PTFE (B), and optionally the extrusion aid and the second optional component into a mold, and then compressing the mixture. After a single compressing operation, the mixture may be again injected into the mold and the process may be repeated (this is also referred to as addition molding).

The mold may be any mold having the shape of a desired preformed article or a similar shape and resistant to the molding pressure. It may be a cylindrical one called a cylinder, and may be a cylinder of ram extrusion molding device or an extrusion cylinder of a paste extrusion molding device.

After the mixture is injected into the mold, a tool such as a ram, piston, plunger, press, or punch is attached to the mold and the mixture is compressed. This compression may be performed by a known method, and is preferably performed such that the pressure is applied gradually so as to remove the air inside the mixture. The pressure applied (molding pressure) depends on factors such as the shape and dimensions, and is usually 2 to 10 MPa. The pressure is appropriately 5 to 50 MPa for the mixture containing a filler. The pressure is preferably maintained for 10 seconds to 60 minutes (preferably, 1 to 50 minutes, more preferably 10 to 40 minutes).

The compression may be performed by decompressing the mold filled with the mixture. Such compression under decompression leads to a uniform density inside the resulting preformed article. Nevertheless, it is advantageous to perform the compression at normal pressure in terms of time and cost.

The decompression may be performed at any stage before completion of the compression as long as the air inside the mixture is removed. For example, the decompression may be started before the pressure for compression is

applied to the mixture, or may be started after this pressure is applied. In order to achieve smooth decompression, the decompression is preferably started before the compression causes deformation of the PTFE powder. In order to remove the air sufficiently, the compression is more preferably performed after the mold is decompressed to a certain pressure (atmospheric pressure), still more preferably performed while a certain pressure (atmospheric pressure) is maintained during the compression.

The coating step is preferably such that the mixture of the high-molecular-weight PTFE (A) and the low-molecular-weight PTFE (B) is applied with a thickness of 0.1 to 5 mm onto the core wire. The thickness of the mixture applied is more preferably 0.3 to 3 mm.

The core wire may be a copper wire, an aluminum wire, or a plated copper wire, for example. The core wire usually has a diameter of 0.1 to 3 mm, more preferably 0.3 to 1.6 mm, still more preferably 0.5 to 1 mm.

The method for producing an electric wire of the invention preferably further includes a drying step of drying the core wire coated with the mixture (hereinafter, also referred to as the "coated core wire") before the first heating step. The drying step is achieved by natural drying or heating, for example.

In the case of heat-drying, the drying temperature may be any temperature lower than the first melting point of the low-molecular-weight PTFE (B), and is preferably 150°C to 300°C, for example.

The drying may be achieved by passing the coated core wire through a drying furnace set to a temperature lower than the first melting point of the low-molecular-weight PTFE (B), for example.

In the first heating step, the coated core wire is heated up to the first melting point of the low-molecular-weight PTFE (B) or higher. Heating the coated core wire up to the first melting point of the low-molecular-weight PTFE (B) or higher leads to melting of the low-molecular-weight PTFE (B).

The first heating step may be performed by passing the coated core wire through a heating furnace set to the first melting point of the low-molecular-weight PTFE (B) or higher, for example.

In the first heating step, the temperature of the coated core wire itself needs to be the first melting point of the low-molecular-weight PTFE (B) or higher so as to melt the low-molecular-weight PTFE (B) constituting the coated core wire.

The heating temperature in the first heating step is determined in consideration of the heating time so as to heat the low-molecular-weight PTFE (B) in the coated core wire up to the first melting point thereof or higher. The heating temperature is preferably the first melting point of the low-molecular-weight PTFE (B) or higher, for example. Specifically, it is preferably 327°C or higher, more preferably 330°C or higher, still more preferably 333°C or higher. The upper limit of the heating temperature is preferably set so as not to melt the high-molecular-weight PTFE (A). Specifically, it is preferably 339°C or lower, more preferably 337°C or lower.

The heating temperature in the first heating step has only to be the first melting point of the low-molecular-weight PTFE (B) or higher, and may vary during the first heating step. For example, in the case of passing the coated core wire through three consecutive heating furnaces (first to third heating furnaces), the heating temperature has only to be the first melting point of the low-molecular-weight PTFE (B) or higher in all of the three heating furnaces. The coated core wire may be passed through the first heating furnace set to a temperature within the range from the first melting point of the low-molecular-weight PTFE (B) to 332°C, the second heating furnace set to 333°C or higher, and the third heating furnace set to 333°C or higher.

The heating temperature is the temperature of the atmosphere where the coated core wire is heated, and may not be the temperature of the coated core wire itself in some cases.

For example, in the case of performing the first heating step by passing the coated core wire through a heating furnace in a short heating time, the temperature of the coated core wire itself may not reach the first melting point of the low-molecular-weight PTFE (B) even if the temperature in the heating furnace through which the coated core wire passes is set to the first melting point of the low-molecular-weight PTFE (B) or higher.

The heating time in the first heating step has only to be a time enough to heat the low-molecular-weight PTFE (B) in the coated core wire up to the first melting point thereof or higher and to melt the low-molecular-weight PTFE (B). Even though it depends on factors such as the heating temperature in the first heating step, the heating time is preferably 10 to 150 seconds, more preferably 20 to 120 seconds, still more preferably 30 to 100 seconds. Too long a heating time may cause melting of not only the low-molecular-weight PTFE (B) but also the high-molecular-weight PTFE (A), possibly causing a failure in producing an electric wire with a low dielectric loss. Too short a heating time may cause insufficient melting of the low-molecular-weight PTFE (B), possibly causing a reduced mechanical strength.

The heating time may be a residence time of the coated core wire in a heating furnace, and can be calculated by (length of heating furnace in direction along which coated core wire passes) × (rate of coated core wire passing through heating furnace).

In the second heating step, the coated core wire is heated to 150°C to 300°C. The coated core wire having been heated up to the first melting point of the low-molecular-weight PTFE (B) or higher in the first heating step is then heated to 150°C to 300°C in the second heating step. Thus, the coated core wire is not rapidly cooled down but gradually cooled down. Gradual cooling presumably increases the crystallinity of the low-molecular-weight PTFE (B), reducing

the dielectric loss of the electric wire.

The second heating step may be performed by passing the coated core wire through a heating furnace set to 150°C to 300°C, for example.

The second heating step is performed successively after the first heating step so as not to allow the temperature of the low-molecular-weight PTFE (B) constituting the coated core wire to be lower than the first melting point.

Similar to the heating temperature in the first heating step, the heating temperature in the second heating step is the temperature of the atmosphere where the coated core wire is heated, and may not be the temperature of the coated core wire itself in some cases.

The heating temperature in the second heating step is preferably 150°C or higher, more preferably 200°C or higher, while preferably 300°C or lower, more preferably 250°C or lower.

The heating temperature in the second heating step has only to be 150°C to 300°C. Similar to the heating temperature in the first heating step, the heating temperature may vary during the second heating step.

The heating time in the second heating step depends on the heating temperature in the first heating step and the heating temperature in the second heating step, and is preferably 6 to 60 seconds, more preferably 10 to 40 seconds, still more preferably 15 to 30 seconds, for example.

In the case of performing the second heating step by passing the coated core wire through a heating furnace, the heating time may be a time for passing the coated core wire through a heating furnace set to 150°C to 300°C (the residence time of the coated core wire in the heating furnace).

The temperature drop rate in the second heating step is preferably 500°C/min or lower, more preferably 400°C/min or lower, still more preferably 300°C/min or lower.

The temperature drop rate is a value represented by the following formula (1):

$$\text{Temperature drop rate} = (T^1 - T^2)/t \quad (1)$$

wherein $T^1$ (°C): the set temperature of the point apart from the finishing end of the heating furnace used in the first heating step by 1 m in the direction opposite to the traveling direction of the coated core wire;
$T^2$ (°C): the set temperature of the point apart from the starting end of the heating furnace used in the second heating step by 1 m in the traveling direction of the coated core wire; and
t (min): 2 (m)/(rate of passing coated core wire through heating furnace) (m/min).

It should be noted that t means the time (min) the coated core wire requires to pass between the point apart from the finishing end of the heating furnace used in the first heating step by 1 m in the direction opposite to the traveling direction of the coated core wire and the point apart from the starting end of the heating furnace used in the second heating step by 1 m in the traveling direction of the coated core wire.

The heating furnace has an inlet through which the coated core wire is inserted and an outlet through which the coated core wire is discharged. In the case of using a single heating furnace in each of the heating steps, the inlet of the heating furnace corresponds to the starting end and the outlet thereof corresponds to the finishing end.

If the coated core wire is passed through multiple heating furnaces successively in the first heating step, the finishing end of the heating furnaces used in the first heating step corresponds to the outlet of the heating furnace through which the coated core wire passes last.

If the coated core wire is passed through multiple heating furnaces successively in the second heating step, the starting end of the heating furnaces used in the second heating step corresponds to the inlet of the heating furnace through which the coated core wire passes first.

The outlet of one heating furnace and the inlet of the heating furnace successively disposed adjacent thereto are placed in close contact with each other.

In the invention, preferably, the difference between the heating temperature in the first heating step and the heating temperature in the second heating step is 40°C to 200°C and the heating time in the second heating step is 6 to 60 seconds, more preferably 10 to 40 seconds. More preferably, the difference between the heating temperatures is 50°C to 150°C and the heating time in the second heating step is 15 to 30 seconds. The difference between the heating temperatures is a value obtained by subtracting $T^2$ from $T^1$.

The cooling step is a step of cooling the coated core wire after the second heating step down to a temperature lower than the heating temperature in the second heating step. The cooling may be achieved by any method such as natural cooling, air cooling, or water cooling, and is usually achieved by natural cooling.

An electric wire produced by the production method of the invention may have any diameter. The diameter is usually 1 to 6 mm, preferably 1.2 to 5 mm, more preferably 1.5 to 4 mm.

A specific example of the production method of the invention is described below. However, the production

method of the invention is not limited thereto. First, the high-molecular-weight PTFE (A) and the low-molecular-weight PTFE (B) are mixed by dry blending, for example, to provide a powder mixture of the high-molecular-weight PTFE (A) and the low-molecular-weight PTFE (B) .

Then, this powder mixture is mixed with an extrusion aid and the mixture is preformed to provide a mixture (preformed article) of the high-molecular-weight PTFE (A), the low-molecular-weight PTFE (B), and the extrusion aid.

The resulting mixture (preformed article) is put into an electric wire molding device and extruded together with a core wire to provide a coated core wire including the core wire coated with the mixture.

If necessary, the coated core wire is heat-dried at a temperature lower than the first melting point of the low-molecular-weight PTFE (B). The coated core wire is then passed through a heating furnace set to the first melting point of the low-molecular-weight PTFE (B) or higher, followed by a heating furnace set to 150°C to 300°C.

Thereafter, the coated core wire passed through the heating furnace is cooled down by natural cooling, for example. Thereby, an electric wire is obtained.

Next, the low-molecular-weight PTFE(B), the high-molecular-weight PTFE (A), the extrusion aid, and other components used in the method for producing an electric wire of the invention are described in detail below.

In order to provide an electric wire with a lower dielectric loss, the high-molecular-weight PTFE (A) preferably has a standard specific gravity (SSG) of 2.230 or lower, more preferably 2.200 or lower, still more preferably 2.180 or lower. The standard specific gravity (SSG) is also preferably 2.130 or higher, more preferably 2.140 or higher.

The standard specific gravity is a value determined by water displacement in conformity with ASTM D4895-98.

The high-molecular-weight PTFE (A) preferably has fibrillatability. The high-molecular-weight PTFE (A) also preferably has non-melt-fabricability. The non-melt-fabricability means that a polymer cannot be molten and be processed in a molten state.

The high-molecular-weight PTFE (A) preferably has a first melting point of 333°C to 347°C, more preferably 340°C to 345°C.

The first melting point is the temperature corresponding to the maximum value on a heat-of-fusion curve with a temperature-increasing rate of 10°C/min using a differential scanning calorimeter (DSC) for a high-molecular-weight PTFE (A) sample which has never been heated up to 300°C or higher.

The high-molecular-weight PTFE (A) is preferably one which has never been heated up to 300°C or higher.

The high-molecular-weight PTFE (A) preferably has an average primary particle size of 0.05 to 0.5 μm, more preferably 0.1 to 0.5 μm, still more preferably 0.15 to 0.35 μm.

The average primary particle size can be determined as follows. First, a calibration curve is drawn with respect to the transmittance of incident light at a wavelength of 550 nm against the unit length of an aqueous dispersion in which the polymer concentration is adjusted to 0.22 mass% and the average primary particle size determined by measuring the Feret diameters on a transmission electron microscopic (TEM) image. Then, the transmittance of the target aqueous dispersion is measured and the average primary particle size is determined based on the calibration curve.

The high-molecular-weight PTFE (A) preferably has an average secondary particle size of 200 to 800 μm, more preferably 300 to 700 μm, still more preferably 400 to 600 μm.

The average secondary particle size is the value corresponding to 50% of the cumulative volume in the particle size distribution determined using a laser diffraction particle size distribution analyzer (e.g., a product from Jeol Ltd.) at a pressure of 0.1 MPa and a measurement time of 3 seconds without cascade impaction.

The high-molecular-weight PTFE (A) can be produced by a common polymerization method such as emulsion polymerization or suspension polymerization, and is preferably produced by emulsion polymerization. The emulsion polymerization may be performed by any of methods, including conventionally known methods.

The high-molecular-weight PTFE (A) may be either a homopolymer of TFE or a modified PTFE modified with a different monomer.

The modified PTFE is a PTFE containing tetrafluoroethylene (TFE) and a monomer other than TFE (hereinafter, also referred to as a "modifier"). The modified PTFE may be uniformly modified, or may be a modified PTFE having a core-shell structure to be described later.

The modified PTFE contains a TFE unit based on TFE and a modifier unit based on a modifier. The modified PTFE preferably satisfies that the modifier unit represent 0.001 to 0.5 mass% of all the monomer units. The lower limit of the amount is more preferably 0.005 mass%, still more preferably 0.01 mass%, while the upper limit thereof is more preferably 0.3 mass%, still more preferably 0.2 mass%.

The "modifier unit" herein means a portion of the molecular structure of the modified PTFE and a repeating unit derived from a comonomer used as a modifier. For example, in the case of using perfluoropropyl vinyl ether as a modifier, the modifier unit is represented by $-[CF_2-CF(-OC_3F_7)]-$, and in the case of using hexafluoropropylene, the modifier unit is represented by $-[CF_2-CF(-CF_3)]-$.

The modifier may be any modifier copolymerizable with TFE, and may be a perfluoroolefin such as HFP; a chlorofluoroolefin such as chlorotrifluoroethylene (CTFE); a hydrogen-containing fluoroolefin such as trifluoroethylene or vinylidene fluoride (VDF); a perfluorovinyl ether; a perfluoroalkyl ethylene, and ethylene. One modifier may be used,

or multiple modifiers may be used.

The perfluorovinyl ether may be any one, and examples thereof include unsaturated perfluoro compounds represented by the following formula (A):

$CF_2$=CF-ORf (A)

(wherein Rf is a perfluoroorganic group). The "perfluoroorganic group" herein means an organic group in which all of the hydrogen atoms bonding to any carbon atom are replaced by fluorine atoms. The perfluoroorganic group may contain etheric oxygen.

Examples of the perfluorovinyl ether include perfluoro(alkyl vinyl ethers) (PAVEs) represented by the formula (A) wherein Rf is a C1-C10 perfluoroalkyl group. The carbon number of the perfluoroalkyl group is preferably 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group. The perfluoroalkyl group is preferably a perfluoropropyl group. In other words, the PAVE is preferably PPVE.

Examples of the perfluorovinyl ether also include those represented by the formula (A) wherein Rf is a C4-C9 perfluoro(alkoxyalkyl) group, Rf is a group represented by the following formula:

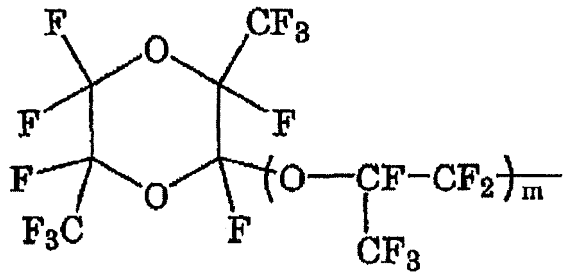

(wherein m is 0 or an integer of 1 to 4), or Rf is a group represented by the following formula:

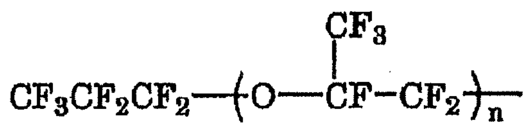

(wherein n is an integer of 1 to 4).

The perfluoroalkyl ethylene (PFAE) may be any one, and examples thereof include (perfluorobutyl)ethylene (PFBE) and (perfluorohexyl)ethylene.

The modifier in the modified PTFE is preferably at least one selected from the group consisting of HFP, CTFE, VDF, PAVE, PFAE, and ethylene. PAVE is more preferred, and PPVE is still more preferred.

The modified PTFE may have a core-shell structure including a particle core and a particle shell. The modified PTFE is in the form of primary particles in a polymerization reaction medium for providing the modified PTFE. The primary particles can be considered as polymer particles directly after the polymerization, and are to aggregate in post-processes such as coagulation to form secondary particles.

The modified PTFE is substantially a conglomeration of secondary particles. The conglomeration of secondary particles constituting the modified PTFE may be a powder obtainable by coagulating and drying a polymerization reaction medium after the polymerization reaction or may be a pulverized product of this powder for purposes such as particle size adjustment.

For the modified PTFE, the "particle core" and the "particle shell" are those in the structure of each primary particle constituting the secondary particles.

The primary particle constituting the modified PTFE seems to have a layered structure of the particle core and the particle shell. Still, the particle core and the particle shell need not to share a clear boundary therebetween. A modified PTFE (i) (described later) constituting the particle core and a modified PTFE (ii) (described later) constituting the particle shell may be mixed together around the boundary between the particle core and the particle shell.

In order to reduce the extrusion pressure, the particle core of the modified PTFE preferably represents 85 to 95 mass% of the sum of the particle core and the particle shell. The lower limit of this value is more preferably 87 mass%, while the upper limit thereof is more preferably 93 mass%. The sum of the particle core and the particle shell is not necessarily a clear value, and includes the boundary between these portions and the vicinity of the boundary.

The particle core of the modified PTFE preferably contains a modified polytetrafluoroethylene (modified PTFE)

(i) obtainable by copolymerizing at least one selected, as a modifier, from the group consisting of:

fluoro(alkyl vinyl ethers) represented by the following formula (I):

$$F_2C=CFO(CF_2)_{n1}X^1 \qquad (I)$$

(wherein $X^1$ is a hydrogen atom or a fluorine atom; and n1 is an integer of 1 to 6);
vinyl heterocycles represented by the following formula (II):

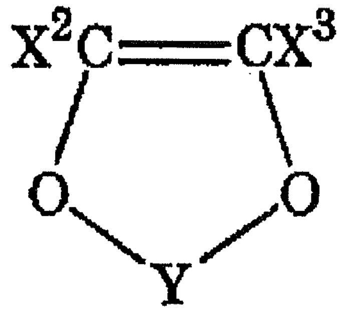

(II)

(wherein $X^2$ and $X^3$ are the same as or different from each other, and are each a hydrogen atom or a fluorine atom; and Y is $-CR^1R^2-$, where $R^1$ and $R^2$ are the same as or different from each other, and are each a fluorine atom, a C1-C6 alkyl group, or a C1-C6 fluoroalkyl group); and
fluoroolefins represented by the following formula (III) :

$$CX^4X^5=CX^6(CF_2)_{n2}F \qquad (III)$$

(wherein $X^4$, $X^5$, and $X^6$ are each a hydrogen atom or a fluorine atom, and at least one of them is a fluorine atom; and n2 is an integer of 1 to 5).

The term "modified polytetrafluoroethylene (modified PTFE)" without a reference symbol (i) or (ii) herein means the concept that can include both the modified PTFE (i) and a modified PTFE (ii) (described later) without distinction.
The fluoro(alkyl vinyl ethers) represented by the formula (I) preferably satisfy that n1 is 1 to 4, more preferably 3 or smaller.
The fluoro(alkyl vinyl ethers) represented by the formula (I) are preferably perfluoro(alkyl vinyl ethers) wherein $X^1$ is a fluorine atom.
Examples of the perfluoro(alkyl vinyl ethers) include perfluoro(methyl vinyl ether) (PMVE), perfluoro(ethyl vinyl ether) (PEVE), perfluoro(propyl vinyl ether) (PPVE), and perfluoro(butyl vinyl ether) (PBVE).
The vinyl heterocycles represented by the formula (II) preferably satisfy that $X^2$ and $X^3$ are fluorine atoms, and preferably satisfy that $R^1$ and $R^2$ are C1-C6 fluoroalkyl groups.
A preferred example of the vinyl heterocycles represented by the formula (II) is perfluoro-2,2-dimethyl-1,3-dioxole (PDD) wherein $X^2$ and $X^3$ are fluorine atoms; and $R^1$ and $R^2$ are perfluoromethyl groups.
Preferred examples of the fluoroolefins represented by the formula (III) include HFP and (perfluoroalkyl)ethylenes (PFAEs) such as (perfluorobutyl)ethylene (PFBE) and (perfluorohexyl)ethylene.
The modifier in the particle core is preferably a fluoro(alkyl vinyl ether) represented by the formula (I), more preferably one represented by the formula (I) wherein $X^1$ is a fluorine atom and n1 is an integer of 1 to 3, still more preferably perfluoro(propyl vinyl ether) (PPVE).
The modified PTFE (i) may be one obtainable by the use of two modifiers, such as a TFE terpolymer obtainable by copolymerization with a fluoro(alkyl vinyl ether) represented by the formula (I) and a fluoroolefin represented by the formula (III). Examples of the modified PTFE (i) obtainable by the use of two modifiers include a TFE terpolymer obtainable by copolymerization with PPVE and HFP.
In order to improve the transparency, the modifier unit derived from a modifier in the particle core preferably represents 0.001 to 0.5 mass% of all the primary particles constituting the modified PTFE, although this amount is in accordance with the type of the modifier. The lower limit of the amount is more preferably 0.005 mass%, still more preferably 0.01 mass%, while the upper limit thereof is more preferably 0.3 mass%, still more preferably 0.2 mass%.
In the case of using PPVE as a comonomer in the particle core, the modifier unit derived from a modifier in the particle core preferably represents 0.01 to 0.5 mass% of all the primary particles constituting the modified PTFE. The lower limit of the amount is more preferably 0.02 mass%, while the upper limit thereof is more preferably 0.2 mass%.

The particle shell in the modified PTFE preferably contains a modified polytetrafluoroethylene (modified PTFE) (ii) .

The modified PTFE (ii) is a tetrafluoroethylene polymer modified without any deterioration of the characteristics of a tetrafluoroethylene homopolymer.

The modification in the modified PTFE (ii) herein may be achieved by copolymerization with a modifier which is a monomer copolymerizable with TFE or by addition of a chain-transfer agent during the polymerization, or by both of them.

In the particle shell of the modified PTFE, the modification in the modified PTFE (ii) is preferably achieved by the use of a chain-transfer agent and/or by copolymerization with a fluoro(alkyl vinyl ether) represented by the following formula (I):

$$F_2C{=}CFO(CF_2)_{n1}X^1 \qquad (I)$$

(wherein $X^1$ is a hydrogen atom or a fluorine atom; and n1 is an integer of 1 to 6) or a fluoroolefin represented by the following formula (III):

$$CX^4X^5{=}CX^6(CF_2)_{n2}F \qquad (III)$$

(wherein $X^4$, $X^5$, and $X^6$ are each a hydrogen atom or a fluorine atom, and at least one of them is a fluorine atom; and n2 is an integer of 1 to 5).

The chain-transfer agent used for the modification in the particle shell may be any agent that can reduce the molecular weight of the modified PTFE (ii) constituting the particle shell. Examples thereof include those containing any of non-peroxidized organic compounds such as water-soluble alcohols, hydrocarbons, and fluorinated hydrocarbons, water-soluble organic peroxides such as disuccinic acid peroxide (DSP), and/or persulfates such as ammonium persulfate (APS) and potassium persulfate (KPS).

The chain-transfer agent is only required to contain at least one selected from the group consisting of non-peroxidized organic compounds, water-soluble organic peroxides, and persulfates.

In the chain-transfer agent, non-peroxidized organic compounds may be used alone or in combination of two or more, water-soluble organic peroxides may be used alone or in combination of two or more, and/or persulfates may be used alone or in combination of two or more.

In order to achieve good dispersibility and uniformity in the reaction system, the chain-transfer agent is preferably at least one selected from the group consisting of C1-C4 water-soluble alcohols, C1-C4 hydrocarbons, and C1-C4 fluorinated hydrocarbons, more preferably at least one selected from the group consisting of methane, ethane, n-butane, isobutane, methanol, HFC-134a, HFC-32, DSP, APS, and KPS, still more preferably methanol and/or isobutane.

The modifier used as a comonomer for the modification in the particle shell is preferably a fluoroolefin represented by the formula (III).

Examples of the fluoroolefin include C2-C4 perfluoroolefins and C2-C4 hydrogen-containing fluoroolefins.

The fluoroolefin is preferably a perfluoroolefin, more preferably hexafluoropropylene (HFP).

In order to improve the green strength, the modifier unit derived from a modifier used as a comonomer in the particle shell preferably represents 0.001 to 0.50 mass% of all the primary particles constituting the modified PTFE, although this amount is in accordance with the type of the modifier. The lower limit of the amount thereof is more preferably 0.005 mass%, while the upper limit thereof is more preferably 0.20 mass%, still more preferably 0.10 mass%.

The modification in the modified PTFE (ii) for the purpose of reducing the extrusion pressure to be described later can sufficiently be achieved by either the use of a chain-transfer agent or copolymerization with a modifier. Still, it is preferred to perform both the copolymerization with a modifier and the use of a chain-transfer agent.

In the case of using a fluoro(alkyl vinyl ether) represented by the formula (I), in particular PPVE, as a modifier in the modified PTFE (i) constituting the particle core, the modification in the modified PTFE (ii) is more preferably achieved by the use of methanol, isobutane, DSP, and/or APS as a chain-transfer agent(s) and by copolymerization with HFP and/or PPVE serving as a modifier(s). The modification is more preferably achieved by the use of methanol and HFP.

The modified PTFE preferably has a cylinder extrusion pressure of 80 MPa or lower at a reduction ratio (RR) of 1600.

The cylinder extrusion pressure at a RR of 1600 is more preferably 70 MPa or lower, still more preferably lower than 70 MPa, particularly preferably 60 MPa or lower, further more preferably 50 MPa or lower, more particularly preferably 45 MPa or lower. Even a cylinder extrusion pressure of 25 MPa or higher causes no industrial problem as long as it is within the above range.

The "cylinder extrusion pressure" herein means a value at a reduction ratio of 1600 obtained by extruding 100 parts by mass of the modified PTFE, with 20.5 parts by mass of hydrocarbon oil (trade name: Isopar G, Exxon Chemical

Co.) added thereto as an extrusion aid, at room temperature (25°C ±2°C, the same shall apply hereinafter).

The composition having a cylinder extrusion pressure within the above range at a RR of 1600 can also suitably be molded even at a RR of 2000 or higher, and thus can be molded into a thin electric wire, which is advantageous in terms of productivity.

The modified PTFE preferably has a permittivity of 2.5 or lower, more preferably 2.2 or lower, at 2.45 GHz.

Also, the modified PTFE preferably has a dielectric loss tangent of 0.0003 or lower, more preferably 0.0002 or lower, at 2.45 GHz.

The permittivity and the dielectric loss tangent are values obtainable by measuring changes in resonance frequency and electric field intensity at 20°C to 25°C using a film-like sample and a cavity resonator. The resonance frequency in the measurement using a cavity resonator becomes lower than 2.45 GHz, but the measured dielectric loss tangent herein is expressed as a value at a frequency under no load. The film-like sample is obtainable as follows. That is, the modified PTFE is compression-molded into a 50-mm-diameter cylinder, and a film is cut out of this cylinder. This film is baked at 380°C for 5 minutes, and gradually cooled down to 250°C at a cooling rate of 60°C/min. The film is maintained at 250°C for 5 minutes, and then is naturally cooled down to room temperature.

The modified PTFE having a permittivity and dielectric loss tangent at 2.45 GHz within the above respective ranges leads to good transmission characteristics as a dielectric material of transmission products, such as coaxial cables, within the microwave band (3 to 30 GHz) or the ultra high frequency (UHF) (lower than 3 GHz).

The high-molecular-weight PTFE (A) can be produced in an aqueous medium in the presence of a water-soluble dispersant serving as an emulsifier. The emulsifier may be a halogen-containing emulsifier or a hydrocarbon emulsifier, for example.

The emulsifier may be one conventionally used in polymerization of TFE, such as a halogen-containing emulsifier or a hydrocarbon emulsifier. The emulsifier is more preferably a fluorine-containing surfactant having a LogPOW value of 3.4 or lower.

Use of a compound having a high LogPOW value disadvantageously seems to cause environmental load, and in consideration of this, it is preferred to use a compound having a LogPOW value of 3.4 or lower. In conventional production of fluorine-containing polymers by emulsion polymerization, ammonium perfluorooctanoate (PFOA) is mainly used as a surfactant. PFOA has a LogPOW value of 3.5, and thus is preferably replaced by a fluorine-containing surfactant having a LogPOW value of 3.4 or lower.

Preferred examples of the fluorine-containing surfactant having a LogPOW value of 3.4 or lower include those mentioned in WO 2009/001894.

The aqueous medium is a medium containing water. The aqueous medium may contain a polar organic solvent in addition to water.

Examples of the polar organic solvent include nitrogen-containing solvents such as N-methylpyrrolidone (NMP); ketones such as acetone; esters such as ethyl acetate; polar ethers such as diglyme and tetrahydrofuran (THF); and carbonate esters such as diethylene carbonate. These solvents may be used alone or in combination of two or more.

The water-soluble dispersant may represent 0.02 to 0.3 mass% of the aqueous medium.

The method of producing the high-molecular-weight PTFE (A) may be performed using, for example, any of polymerization initiators such as persulfates (e.g., ammonium persulfate (APS)) and water-soluble organic peroxides (e.g., disuccinic acid peroxide (DSP)). These polymerization initiators may be used alone or in combination of two or more. In particular, APS and DSP are preferred because they also have effects as the aforementioned chain-transfer agent.

The method of producing the high-molecular-weight PTFE (A) is preferably performed such that the amount of the polymerization initiator is 0.0001 to 0.02 parts by mass for each 100 parts by mass of the aqueous medium.

In the emulsion copolymerization, a polymerization initiator conventionally used in polymerization of TFE may be used.

The polymerization initiator used in the emulsion copolymerization may be a radical polymerization initiator or a redox polymerization initiator.

The amount of the polymerization initiator is preferably as small as possible in order to reduce the SSG of the resulting PTFE. However, too small an amount thereof tends to cause too low a polymerization rate while too large an amount thereof tends to cause generation of a PTFE with a high SSG.

Examples of the radical polymerization initiator include water-soluble peroxides. Preferred examples thereof include persulfates such as ammonium persulfate and potassium persulfate and water-soluble organic peroxides such as disuccinic acid peroxide. More preferred is ammonium persulfate or disuccinic acid peroxide. These initiators may be used alone or in combination of two or more.

The amount of the radical polymerization initiator can appropriately be selected in accordance with the polymerization temperature and the target SSG. The amount preferably corresponds to 1 to 100 ppm, more preferably 1 to 20 ppm, still more preferably 1 to 6 ppm, of the mass of the aqueous medium usually used.

In the case of using a radical polymerization initiator as the polymerization initiator, the radical concentration

in the system can also be adjusted by adding a peroxide decomposer such as ammonium sulfite during the polymerization.

In the case of using a radical polymerization initiator as the polymerization initiator, a PTFE with a low SSG can easily be produced by adding a radical scavenger during the polymerization.

Examples of the radical scavenger include unsubstituted phenols, polyhydric phenols, aromatic hydroxy compounds, aromatic amines, and quinone compounds. Preferred is hydroquinone.

In order to provide a PTFE with a low SSG, the radical scavenger is preferably added before 50 mass%, more preferably 40 mass%, still more preferably 30 mass%, of all the TFE monomers to be consumed in the polymerization reaction are polymerized.

The amount of the radical scavenger preferably corresponds to 0.1 to 20 ppm, more preferably 3 to 10 ppm, of the mass of the aqueous medium used.

Examples of the redox polymerization initiator include a combination of any of oxidizing agents, such as permanganates (e.g., potassium permanganate), persulfates, borates, chlorates, and hydrogen peroxide, and any of reducing agents, such as sulfites, bisulfites, organic acids (e.g., oxalic acid and succinic acid), thiosulfates, iron(II) chloride, and diimines. These oxidizing agents may be used alone or in combination of two or more and these reducing agents may be used alone or in combination of two or more.

Preferred is a combination of potassium permanganate and oxalic acid.

The amount of the redox polymerization initiator can appropriately be selected in accordance with the type of the redox polymerization initiator used, the polymerization temperature, and the target SSG. The amount preferably corresponds to 1 to 100 ppm of the mass of the aqueous medium used.

For the redox polymerization initiator, the oxidizing agent and the reducing agent may simultaneously be added to initiate the polymerization reaction, or either the oxidizing agent or the reducing agent is added in advance to a container and then the other is added thereto to initiate the polymerization reaction.

In the case of adding in advance either the oxidizing agent or the reducing agent to a container and then adding the other to initiate the polymerization reaction, the agent to be added later is preferably added continuously or intermittently.

In the case of continuously or intermittently adding the agent to be added later of the redox polymerization initiator, the rate of adding the agent is preferably gradually reduced, more preferably the addition is stopped during the polymerization, so as to provide a PTFE with a low SSG. The timing of stopping the addition is preferably before 80 mass%, more preferably 65 mass%, still more preferably 50 mass%, particularly preferably 30 mass%, of all the TFE monomers to be consumed in the polymerization reaction are polymerized.

In the case of using a redox polymerization initiator, a pH buffer is preferably used to adjust the pH in the aqueous medium to fall within a range that does not impair the redox reactivity. The pH buffer may be an inorganic salt such as disodium hydrogen phosphate, sodium dihydrogen phosphate, or sodium carbonate, and is preferably disodium hydrogen phosphate dihydrate or disodium hydrogen phosphate dodecahydrate.

In the case of using a redox polymerization initiator, redox-reactive metal ions may be of metals having multiple ionic valences. Preferred specific examples thereof include transition metals such as iron, copper, manganese, and chromium. Particularly preferred is iron.

The method for producing the high-molecular-weight PTFE (A) may be performed at a polymerization temperature of 10°C to 95°C. In the case of using a persulfate or water-soluble organic peroxide as a polymerization initiator, the method is preferably performed at 60°C to 90°C.

The method for producing the high-molecular-weight PTFE (A) may usually be performed at 0.5 to 3.9 MPa, preferably at 0.6 to 3 MPa.

In the method for producing the high-molecular-weight PTFE (A), the reaction may be performed at a pressure of 0.5 MPa or lower at an early stage of polymerization, especially when the conversion of TFE is 15% or lower of all the TFE monomers, and thereafter the pressure may be maintained higher than 0.5 MPa. Alternatively, the reaction may be performed such that the reaction pressure is reduced to, for example, 0.1 MPa or lower during formation of the core, and then TFE is supplied again and reacted at a predetermined pressure.

The "conversion" herein means the proportion of the amount of TFE consumed from the start of the polymerization to a certain timing during the polymerization relative to the amount of TFE corresponding to the target amount of the TFE units.

An aqueous dispersion of the high-molecular-weight PTFE (A) obtainable by the polymerization reaction of TFE is a dispersion containing primary particles of the high-molecular weight PTFE (A) dispersed in the aqueous medium. The primary particles are dispersoids directly after the polymerization without any post-processes such as coagulation.

The aqueous dispersion of the high-molecular-weight PTFE (A) usually has a solids content of 20 to 40 mass%.

The coagulation can be performed by any conventionally known method, and may be performed with optional appropriate addition of a water-soluble organic compound or an inorganic salt formed from a basic compound as a coagulation promotor. Before or during the coagulation, a pigment may be added for the purpose of giving color, and a filler may be added for the purpose of giving conductivity and of improving the mechanical properties.

The drying can usually be performed at 100°C to 250°C, and is preferably performed for 5 to 24 hours. A high drying temperature can actually improve the fluidity of powder but may increase the paste extrusion pressure of the resulting fine powder of the high-molecular-weight PTFE (A). The temperature thus needs to be set very carefully.

The low-molecular-weight PTFE (B) has no fibrillatability. This non-fibrillatable low-molecular-weight PTFE (B) enables production of an electric wire with a low dielectric loss. The low-molecular-weight PTFE (B) preferably has a melt viscosity of $1 \times 10^2$ to $7 \times 10^5$ Pa·s at 380°C.

The melt viscosity can be determined by heating a 2-g sample at a measurement temperature (380°C) for 5 minutes in advance and then keeping this sample at this temperature under a load of 0.7 MPa using a flow tester (Shimadzu Corp.) and a 2$\phi$-8L die in conformity with ASTM D1238.

The low-molecular-weight PTFE (B) is preferably a TFE polymer having a number average molecular weight of 600,000 or lower. The "high-molecular-weight PTFE" having a number average molecular weight exceeding 600,000 exhibits fibrillatability unique to PTFE (e.g., see JP H10-147617 A) .

Any PTFE having a melt viscosity within the above range can have a number average molecular weight within the above range.

The low-molecular-weight PTFE (B) is preferably one directly obtained by polymerizing TFE. Such a low-molecular-weight PTFE is known as a low-molecular-weight PTFE directly after the polymerization.

The low-molecular-weight PTFE (B) may be one obtainable by decomposing a high-molecular-weight PTFE due to irradiation with electron beams or radiation. Still, in order to stabilize the wire diameter and permittivity of an extruded electric wire, the low-molecular-weight PTFE (B) is preferably one directly obtained by polymerizing TFE. The low-molecular-weight PTFE obtainable by decomposition due to irradiation with electron beams or radiation may be produced by, for example, a method disclosed in JP S52-25419 B.

The low-molecular-weight PTFE (B) is non-fibrillatable, and thus fails to provide a continuous extrudate (extruded strand) through paste extrusion. The presence or absence of the fibrillatability can be determined by "paste extrusion", a representative method of molding a "high-molecular-weight PTFE powder" which is a powder of a TFE polymer. The ability of a high-molecular-weight PTFE to be paste-extruded is due to the fibrillatability thereof. If a non-baked molded article obtained by paste extrusion shows substantially no strength or elongation (for example, if it shows an elongation of 0% and is broken when stretched), it can be considered as non-fibrillatable. If a material fails to provide a continuous molded article even when paste-extruded, it can also be considered as non-fibrillatable.

The low-molecular-weight PTFE (B) preferably has a first melting point of 322°C to 333°C, more preferably 325°C to 332°C.

The first melting point is the temperature corresponding to the maximum value on a heat-of-fusion curve obtained by heating a low-molecular-weight PTFE which has never been heated up to 300°C or higher at a temperature-increasing rate of 10°C/min using a differential scanning calorimeter (DSC).

The low-molecular-weight PTFE (B) preferably has a peak top (DSC melting point or first melting point) at 322°C to 333°C on the heat-of-fusion curve obtained at a temperature-increasing rate of 10°C/min using a differential scanning calorimeter with respect to a low-molecular-weight PTFE which has never been heated up to 300°C or higher. Too high a DSC melting point on the heat-of-fusion curve may cause an increase in the pressure loss. The peak top is more preferably at 325°C to 332°C.

Too high a DSC melting point may cause a reduction in the effect of reducing the pressure loss. Too low a melting point may cause a larger amount of high-temperature volatile components, may cause easy generation of decomposed gas during the step of producing a porous film, and may cause coloring of the resulting porous film.

The low-molecular-weight PTFE (B) is preferably one which has never been heated up to 300°C or higher.

The low-molecular-weight PTFE (B) can be produced by emulsion polymerization (e.g., see WO 2009/020187) or suspension polymerization (e.g., see WO 2004/050727). The PTFE (B) may also be produced by a combination of emulsion polymerization and suspension polymerization (e.g., see WO 2010/114033). The PTFE (B) may be produced by emulsion polymerization at an early stage of polymerization and by suspension polymerization at a later stage thereof. The PTFE (B) is preferably one produced by emulsion polymerization.

The low-molecular-weight PTFE (B) may be a modified PTFE or may be a homo-PTFE. The modifying monomer constituting the modified PTFE may be any of those exemplified above.

In the case of the low-molecular-weight PTFE (B) produced by emulsion polymerization, the average primary particle size thereof is preferably 50 to 400 nm, more preferably 100 to 300 nm, still more preferably 150 to 250 nm.

The average primary particle size can be determined as follows. First, a calibration curve is drawn with respect to the transmittance of incident light at a wavelength of 550 nm against the unit length of an aqueous dispersion in which the polymer concentration is adjusted to 0.22 mass% and the average primary particle size determined by measuring the Feret diameters on a transmission electron microscopic (TEM) image. Then, the transmittance of the target aqueous dispersion is measured and the average primary particle size is determined based on the calibration curve.

The low-molecular-weight PTFE (B) may be either a TFE homopolymer or a modified PTFE modified by a different monomer. The modified PTFE contains a TFE unit based on TFE and a modifier unit based on a modifier. The

amount of the modifier unit is preferably 0.005 to 1 mass%, more preferably 0.02 to 0.5 mass%, of all the monomer units. The upper limit of the amount of the modifier unit is still more preferably 0.2 mass%.

The modifier constituting the modified PTFE is preferably any of those exemplified for the high-molecular-weight PTFE (A). The modifier is preferably HFP, for example.

The extrusion aid is an agent that can wet the surfaces of the low-molecular-weight PTFE (B) and the high-molecular-weight PTFE (A), and may be any of those usually used as a paste extrusion aid. Examples of the paste extrusion aid include hydrocarbon solvents, fluorine solvents, silicone solvents, and mixtures of a surfactant and water.

In terms of surface energy and cost reduction, the paste extrusion aid is preferably a hydrocarbon solvent.

The hydrocarbon solvent may be any hydrocarbon usually used as an extrusion aid, for example. Specific examples thereof include solvent naphtha, white oil, naphthenic hydrocarbons, isoparaffinic hydrocarbons, and halides and cyanites of isoparaffinic hydrocarbons.

The naphthenic hydrocarbons and isoparaffinic hydrocarbons each preferably have a carbon number of 20 or lower, more preferably lower than 20.

The naphthenic hydrocarbons and isoparaffinic hydrocarbons each may be in the form of a halide or cyanide.

The hydrocarbon solvent is particularly preferably at least one selected from the group consisting of naphthenic hydrocarbons and isoparaffinic hydrocarbons. Specific examples thereof include Isopar G, Isopar E, and Isopar M (all available from Exxon Mobil Corp.).

The method for producing an electric wire of the invention can produce an electric wire having a low dielectric loss. Thus, the method is particularly suitable for production of cables for transmitting high-frequency signals, such as coaxial cables and LAN cables.

EXAMPLES

The invention is described hereinbelow referring to, but not limited to, examples.

(Method of measuring permittivity and tan δ)

The permittivity and the tan δ were measured using a vector network analyzer (VNA) HP-8510C (Hewlett-Packard Co. (current Agilent Technologies)), and a 2.45 GHz cavity resonator and calculation software (both available from Kanto Electronic Application and Development Inc.).

(Method for measuring coat hardness)

The coat hardness conforms to the Shore A hardness. Specifically, it corresponds to the Shore A hardness measured in conformity with JIS K6301-1975 Type A. More specifically, the hardness was measured using a durometer (also referred to as a spring-type rubber hardness meter).

(Method for calculating temperature drop rate)

<Examples 1 to 3>

$$\text{Temperature drop rate } (^\circ\text{C/min}) = (T^1 - T^2)/t$$

$T^1$ (°C): the set temperature of the point apart from the finishing end of the heating furnace used in the first heating step by 1 m in the direction opposite to the traveling direction of the coated core wire = the set temperature at the center of the third heating furnace

$T^2$ (°C): the set temperature of the point apart from the starting end of the heating furnace used in the second heating step by 1 m in the traveling direction of the coated core wire = the set temperature at the center of the fourth heating furnace

t (min): 2 (m)/line speed (m/min) (the speed of the coated core wire passing through the heating furnaces)

<Comparative Examples 1 to 3>

$$\text{Temperature drop rate } (°C/min) = (T^{\alpha} - T^{\beta})/t^{\gamma}$$

$T^{\alpha}$ (°C): the set temperature at the center of the fourth heating furnace
$T^{\beta}$ (°C): room temperature
$t^{\gamma}$ (min): the time required for passing of the coated core wire from the center of the fourth heating furnace to the point apart from the outlet of the fourth heating furnace by 1 m (the position where the coated core wire reached the crystallizing temperature) = 2 (m)/line speed (m/min) (the speed of the coated core wire passing through the heating furnaces)

(Production Example 1)

Based on Comparative Example 2 of WO 97/17382, a PTFE fine powder (powder of high-molecular-weight PTFE which is TFE homopolymer, average primary particle size: 0.30 μm, standard specific gravity (SSG): 2.173, first melting point: 344°C, apparent density: 0.45 g/ml, powder average particle size (average secondary particle size): 500 μm; hereinafter, this powder is referred to as "PTFE-H") was obtained.

(Production Example 2)

Based on Comparative Example 1 of WO 2009/020187, a PTFE micro powder (powder of low-molecular-weight PTFE which is TFE homopolymer, average primary particle size: 0.18 μm, melt viscosity at 380°C: $1.7 \times 10^4$ Pa·s, first melting point: 329°C, apparent density: 0.36 g/ml, powder average particle size (average secondary particle size): 4.5 μm; hereinafter, this powder is referred to as "PTFE-L") was obtained.

(Example 1)

PTFE-H and PTFE-L were mixed by dry blending such that the proportion of PTFE-H was 92 mass%, the proportion of PTFE-L was 8 mass%, and the sum of the masses was 2 kg. A hydrocarbon solvent (Isopar G) was added thereto as an extrusion aid such that the amount thereof was 19 wt% (469 g). The mixture was aged, and then the resulting powder mixture (containing the extrusion aid) was preformed.
The preforming was performed such that the powder mixture (containing the extrusion aid) was put into the cylinder of a preformer having a cylinder diameter of ϕ50 mm and including a ϕ16-mm mandrel and pressurized. Thereby, a preformed article having an outer diameter of 50 mm and an inner diameter of 16 mm was produced.
This preformed article was put into an 80-ton electric paste wire molding device. The extruding mold used had an inner diameter of 1.921 mm. The core wire used was a silver-plated copper-clad steel wire with a wire diameter of 0.511 mm (AWG 24). The line speed was set to 7.0 m/min. Extrusion was then started, and the diameter immediately after extrusion was 2.0 mm and the extrusion pressure in a stable state was 60 MPa. The extruded workpiece was passed through a 140°C dry capstan for 30 m, a 220°C drying furnace for 8 m, and four continuous heating furnaces (a 330°C first heating furnace, a 333°C second heating furnace, a 333°C third heating furnace, and a 250°C fourth heating furnace) for 8 m in total (each furnace was 2 m in length). Thereby, a wire having a coated outer diameter of 1.90 mm was produced. The temperature drop rate in this case was 290.5°C/min (= (333 - 250)/(2/7) = 290.5) .
In this case, the heating in the first to third heating furnaces corresponds to the first heating step and the heating in the fourth heating furnace corresponds to the second heating step.
The set temperature of the point apart from the finishing end of the heating furnace used in the first heating step by 1 m in the direction opposite to the traveling direction of the coated core wire was 333°C (the set temperature in the third heating furnace).
The set temperature of the point apart from the starting end of the heating furnace used in the second heating step by 1 m in the traveling direction of the coated core wire was 250°C (the set temperature in the fourth heating furnace).
The difference between the heating temperature in the first heating step and the heating temperature in the second heating step ((the set temperature in the third heating furnace) - (the set temperature in the fourth heating furnace)) was 83°C, and the heating time in the second heating step was 17 seconds (2 m/line speed = 2/7 min ≈ 17 seconds).
The set temperatures in the first to fourth heating furnaces were values measured using a thermocouple.
The core was taken out of this electric wire and cut into a length of 110 mm. The permittivity at 2.45 GHz and tan δ thereof were measured by the perturbation method using a cavity resonator. The permittivity and the tan δ were respectively 1.85 and 0.00004. The coat hardness was 92.

(Example 2)

A powder mixture was produced and molded in the same manner as in Example 1 except that the proportion of the PTFE-H was 85 mass% and the proportion of the PTFE-L was 15 mass%. The extrusion pressure in a stable state was 65 MPa. The coated outer diameter after the heating, the permittivity, and the tan δ were respectively 1.90 mm, 1.88, and 0.00006.

(Example 3)

A powder mixture was produced and molded in the same manner as in Example 1 except that the proportion of the PTFE-H was 95 mass% and the proportion of the PTFE-L was 5 mass%. The extrusion pressure in a stable state was 58 MPa. The coated outer diameter after the heating, the permittivity, and the tan δ were respectively 1.90 mm, 1.83, and 0.00003.

(Comparative Example 1)

The process was performed in the same manner as in Example 1 except that the temperatures in the first, second, third, and fourth heating furnaces were respectively set to 320°C, 332°C, 332°C, and 333°C. The temperature drop rate in this case was 1078°C/min (= (333 - 25)/(2/7) = 1078). The coated outer diameter after the heating, the permittivity, and the tan δ were respectively 1.90 mm, 1.81, and 0.00018.

(Comparative Example 2)

A powder mixture was produced and molded in the same manner as in Comparative Example 1 except that the proportion of the PTFE-H was 85 mass% and the proportion of the PTFE-L was 15 mass%. The extrusion pressure in a stable state was 65 MPa. The coated outer diameter after the heating, the permittivity, and the tan δ were respectively 1.90 mm, 1.86, and 0.00026.

(Comparative Example 3)

A powder mixture was produced and molded in the same manner as in Comparative Example 1 except that the proportion of the PTFE-H was 95 mass% and the proportion of the PTFE-L was 5 mass%. The extrusion pressure in a stable state was 58 MPa. The coated outer diameter after the heating, the permittivity, and the tan δ were respectively 1.90 mm, 1.79, and 0.00014.

[Table 1]

| | | Example 1 | Example 2 | Example 3 | Comparative Example 1 | Comparative Example 2 | Comparative Example 3 |
|---|---|---|---|---|---|---|---|
| Temperature drop conditions | | Gradual cooling | Gradual cooling | Gradual cooling | Rapid cooling | Rapid cooling | Rapid cooling |
| PTFE-H | Mass% | 92 | 65 | 95 | 92 | 85 | 95 |
| PTFE-L | Mass% | 8 | 15 | 5 | 8 | 15 | 5 |
| Dry capstan | °C | 140 | 140 | 140 | 140 | 140 | 140 |
| Drying furnace | °C | 220 | 220 | 220 | 220 | 220 | 220 |
| First heating furnace | °C | 330 | 330 | 330 | 320 | 320 | 320 |
| Second heating furnace | °C | 333 | 333 | 333 | 332 | 332 | 332 |
| Third heating furnace | °C | 333 | 333 | 333 | 332 | 332 | 332 |
| Fourth heating furnace | °C | 250 | 250 | 250 | 333 | 333 | 333 |

(continued)

| | | Example 1 | Example 2 | Example 3 | Comparative Example 1 | Comparative Example 2 | Comparative Example 3 |
|---|---|---|---|---|---|---|---|
| Line speed | m/min | 7.0 | 7.0 | 7.0 | 7.0 | 7.0 | 7.0 |
| Temperature drop rate | °C/min | 290.5 | 290.5 | 290.5 | 1078 | 1078 | 1078 |
| Coated outer diameter after heating | mm | 1.90 | 1.90 | 1.90 | 1.90 | 1.90 | 1.90 |
| Permittivity | - | 1.85 | 1.88 | 1.83 | 1.81 | 1.86 | 1.79 |
| Tan $\delta$ | - | 0.00004 | 0.00006 | 0.00003 | 0.00018 | 0.00026 | 0.00014 |
| Coat hardness | - | 92 | 95 | 90 | 93 | 95 | 90 |

**Claims**

**1.** A method for producing an electric wire comprising:

a coating step of coating a core wire with a mixture of a high-molecular-weight polytetrafluoroethylene (A) and a non-fibrillatable low-molecular-weight polytetrafluoroethylene (B);
a first heating step of heating the coated core wire up to the first melting point of the low-molecular-weight polytetrafluoroethylene (B) or higher;
a second heating step of heating the coated core wire to 150°C to 300°C; and
a cooling step of cooling the coated core wire.

**2.** The method for producing an electric wire according to claim 1,
wherein the second heating step satisfies a temperature drop rate of 500°C/min or lower.

**3.** The method for producing an electric wire according to claim 1 or 2,
wherein the second heating step satisfies a heating time of 6 to 60 seconds.

## INTERNATIONAL SEARCH REPORT

International application No.
PCT/JP2016/060755

A. CLASSIFICATION OF SUBJECT MATTER
*H01B13/14*(2006.01)i, *C08L27/18*(2006.01)i

According to International Patent Classification (IPC) or to both national classification and IPC

B. FIELDS SEARCHED

Minimum documentation searched (classification system followed by classification symbols)
H01B13/14, C08L27/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 4617538 B2 (Daikin Industries, Ltd.), 26 January 2011 (26.01.2011), paragraphs [0012], [0021], [0028] to [0044], [0049] & JP 2001-357729 A & WO 2001/097234 A1 & US 2004/0112627 A1 paragraphs [0012], [0022], [0029] to [0045], [0052] | 1-3 |
| Y | JP 2002-047315 A (Daikin Industries, Ltd.), 12 February 2002 (12.02.2002), paragraphs [0008], [0020], [0034], [0080] & US 2004/0236047 A1 paragraphs [0027], [0046], [0103] & WO 2002/012392 A1 & EP 1306407 A1 | 1-3 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 April 2016 (20.04.16) | 10 May 2016 (10.05.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4617538 B
- JP 5167910 B
- JP 5256889 B
- WO 2009001894 A
- JP H10147617 A
- JP S5225419 B
- WO 2009020187 A
- WO 2004050727 A
- WO 2010114033 A
- WO 9717382 A